# FASCICULE DE BREVET EUROPEEN

(11) **EP 2 010 947 B1**
(45) Date de publication et mention de la délivrance du brevet: **09.04.2014**
(21) Numéro de dépôt: 07728262.2
(22) Date de dépôt: 18.04.2007
(51) Int. Cl.: G01J 3/12, G01J 3/02, G02B 5/18, G02B 5/20, G01J 3/36

(54) **FILTRE SPECTRAL MICRO-STRUCTURE ET CAPTEUR D'IMAGES**
MIKROSTRUKTURIERTES SPEKTRALFILTER UND BILDSENSOR
MICROSTRUCTURED SPECTRAL FILTER AND IMAGE SENSOR

(30) Priorité: 19.04.2006 FR 0651368
(43) Date de publication de la demande: 07.01.2009
(73) Titulaire: Commissariat à l'Énergie Atomique et aux Énergies Alternatives, 75015 Paris (FR)
(72) Inventeur: DESIERES, Yohan, 38000 Grenoble (FR)
(74) Mandataire: Ilgart, Jean-Christophe
(86) Numéro de dépôt international: PCT/EP2007/053800
(87) Numéro de publication internationale: WO 2007/118895

(56) Documents cités:
- EP-A2- 0 807 846
- EP-A2- 0 992 833
- EP-A2- 1 416 303
- WO-A-2005/038501
- GB-A- 722 749
- US-A1- 2003 103 150
- US-A1- 2005 153 105
- US-A1- 2006 007 791
- BRAUER R ET AL: "DESIGN OF ANTIREFLECTION GRATINGS WITH APPROXIMATE AND RIGOROUS METHODS" APPLIED OPTICS, OSA, OPTICAL SOCIETY OF AMERICA, WASHINGTON, DC, US, vol. 33, no. 34, 1 décembre 1994 (1994-12-01), pages 7875-7882, XP000485531 ISSN: 0003-6935
- SCHMITZ M ET AL: "PHASE GRATINGS WITH SUBWAVELENGTH STRUCTURES" JOURNAL OF THE OPTICAL SOCIETY OF AMERICA - A, OPTICAL SOCIETY OF AMERICA, WASHINGTON, US, vol. 12, no. 11, 1 novembre 1995 (1995-11-01), pages 2458-2462, XP000535265 ISSN: 1084-7529

## Description

### DOMAINE TECHNIQUE ET ART ANTÉRIEUR

L'invention concerne le domaine des techniques de filtrage, et en particulier celui des filtres spectraux utilisés dans les capteurs d'images.

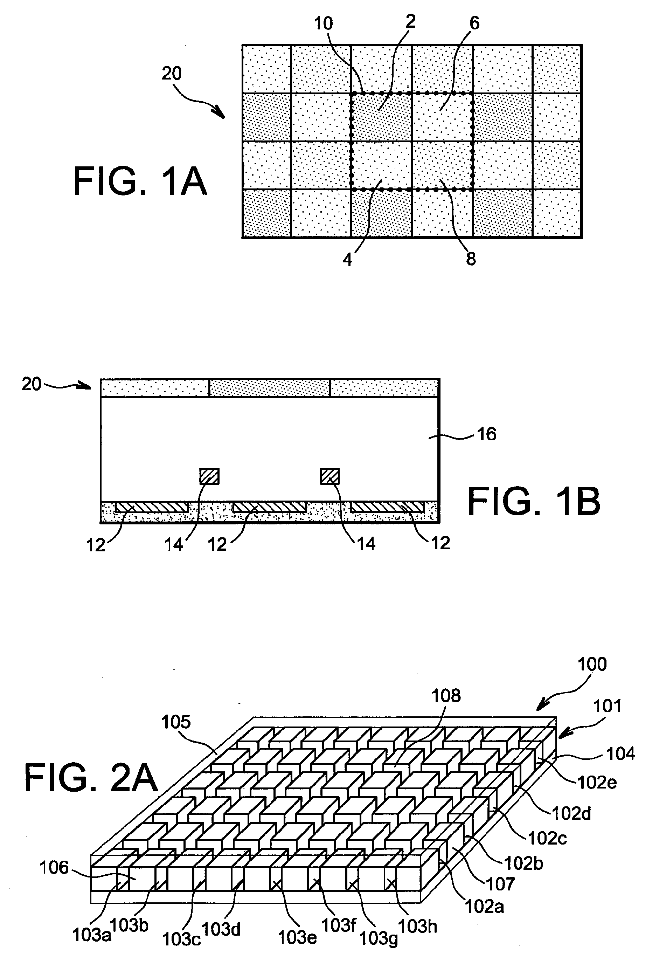

Les capteurs d'images, que l'on trouve notamment dans les téléphones portables et les appareils photo numériques, sont constitués principalement d'une matrice de photodétecteurs et d'une optique de focalisation. Cette optique permet de former l'image d'un objet sur la matrice de photodétecteurs. Pour obtenir des images en couleurs, il est connu d'aligner un réseau 20 de filtres colorés sur les pixels du capteur. Le matriçage de ce réseau 20 se fait suivant un schéma dit de « BAYER », comme cela est représenté sur la figure 1A, qui matrice un filtre rouge 2, deux filtres verts 4, 6, et un filtre bleu 8. Chacun des photodétecteurs disposés sous ces filtres constitue un sous pixel. L'ensemble de ces quatre sous pixels constitue un pixel 10 de la matrice de photodétecteurs. La couleur de l'image est reconstruite numériquement à partir des signaux « mono couleurs » reçus par les pixels de la matrice de photodétecteurs. Ces filtres sont habituellement positionnés à quelques micromètres au dessus de photodétecteurs 12, d'interconnexions électriques 14 et de couches de passivation diélectrique 16, comme cela est représenté sur la figure 1B.

Dans le domaine des capteurs d'images grand public, le capteur est placé au foyer d'une lentille de forte ouverture: l'angle moyen d'incidence des faisceaux lumineux sur le capteur peut varier de -25° à +25° entre deux coins du capteur et l'ouverture angulaire sur chaque pixel du capteur est typiquement de l'ordre de +/- 10°. Chaque filtre est illuminé sous de multiples incidences. Pour réaliser le filtrage des couleurs, il est important que les propriétés des filtres (longueur d'onde de transmission, niveau de transmission, largeur spectrale) soient constantes quelque soit l'angle d'incidence. Des filtres dont les propriétés sont indépendantes de l'angle d'incidence doivent être utilisés.

Pour cela, il est connu d'utiliser un réseau de fentes parallèles pour filtrer de la lumière : ce filtre est, de par ses caractéristiques géométriques, adapté à une gamme de longueurs d'ondes. En effet, le document US 2003/0103150 décrit un réseau unidimensionnel de fentes débouchantes dans une couche métallique pour réaliser la fonction de filtrage des couleurs. Avec cette géométrie, les calculs montrent que ce sont les fentes qui assurent également la transmission des faisceaux lumineux filtrés à travers la couche métallique. Ils montrent aussi que le filtrage est plus sélectif lorsque les fentes ont une largeur inférieure aux longueurs d'ondes de la lumière visible.

Toutefois, le rendement photométrique de ces filtres est très faible car seule une polarisation de la lumière est filtrée et transmise, ce qui est un inconvénient majeur pour le domaine d'application visé.

Une autre limitation est liée à l'existence de modes électromagnétiques à la surface de la couche métallique formant le réseau de fentes, appelés plasmons de surface. Ces modes électromagnétiques peuvent être excités lors de la diffraction de la lumière incidente sur les fentes de la couche métallique. Cette excitation, sélective en longueur d'onde et en angle, dégrade la fonction de filtre passe bande réalisée par les fentes.

### EXPOSÉ DE L'INVENTION

Un but de la présente invention est de proposer un dispositif réalisant un filtrage en longueurs d'ondes, dont les propriétés de transmission soient constantes quelque soit l'angle d'incidence des faisceaux lumineux et permettant d'obtenir un rendement photométrique élevé.

Pour cela, la présente invention propose un filtre spectral comportant au moins une couche métallique structurée par un réseau de fentes traversantes, le réseau étant constitué d'au moins deux premiers sous réseaux de fentes traversantes se coupant perpendiculairement les unes aux autres.

Ainsi, avec un tel filtre spectral, il est possible de réaliser la transmission et le filtrage à la fois des modes polarisés transverse électrique TE et des modes polarisés transverse magnétique TM des faisceaux lumineux reçus, permettant d'obtenir un bon rendement photométrique du filtre, notamment dans les conditions d'incidence de capteurs d'images de type CMOS.

De plus, l'invention permet d'ajuster la longueur d'onde transmise par le filtre au moyen de ses paramètres géométriques et non de paramètres chimiques liés au filtre.

Le filtre spectral peut comporter en outre au moins un troisième sous réseau de fentes traversantes coupant les fentes des deux premiers sous réseaux.

Les fentes du troisième sous réseau peuvent couper les fentes des deux premiers sous réseaux selon un angle égal à environ 45 degrés.

Le filtre spectral peut également comporter en outre au moins un quatrième sous réseau de fentes traversantes coupant les fentes des deux premiers sous réseaux et les fentes du troisième sous réseau.

Les fentes du quatrième sous réseau peuvent couper perpendiculairement les fentes du troisième sous réseau. Ainsi, lorsque les fentes du troisième sous réseau coupent les fentes des deux premiers sous réseaux avec un angle égal à environ 45 degrés, les fentes du quatrième sous réseau coupent également les fentes des deux premiers sous réseaux avec un angle égal à environ 45 degrés, formant quatre sous réseaux de fentes décalés de 45 degrés les uns des autres.

Les fentes d'un ou de chacun des sous réseaux peuvent être régulièrement espacées les unes des autres et/ou comporter chacune une largeur identique.

Chaque sous réseau peut être formé par la répétition d'un motif périodique, ledit motif périodique comportant une des fentes du sous réseau et une partie de la couche métallique séparant deux fentes adjacentes du sous réseau.

La largeur du motif périodique d'un ou de chacun des sous réseaux peut être inférieure à environ 350 nm.

Le filtre spectral peut également comporter en outre au moins une première couche diélectrique disposée au dessus de la couche métallique structurée et/ou au moins une seconde couche diélectrique disposée en dessous de la couche métallique structurée.

L'épaisseur de la première et/ou la seconde couche diélectrique peut être comprise entre environ 50 nanomètres (nm) et quelques centaines de nm.

La présente invention concerne également un capteur d'images comportant au moins un premier et un second filtre spectral, objets de la présente invention, disposés dans un même plan horizontal, et au moins deux photodétecteurs disposés sous les filtres spectraux.

L'épaisseur de la couche métallique du premier filtre spectral peut être différente ou identique à l'épaisseur de la couche métallique du second filtre spectral.

La largeur du motif périodique et/ou la largeur des fentes des deux filtres spectraux peuvent être identiques ou différentes.

Le capteur d'image peut comporter en outre une couche de protection recouvrant les filtres spectraux.

Le capteur d'images peut comporter en outre un troisième et un quatrième filtre spectral, les quatre filtres spectraux formant un filtre de Bayer, et au moins deux autres photodétecteurs disposés chacun sous l'un des troisième et quatrième filtres spectraux, le filtre de Bayer et les quatre photodétecteurs formant un pixel du capteur d'images.

Le capteur d'images peut également comporter une couche support disposée entre les photodétecteurs et les filtres spectraux.

La présente invention concerne également un procédé de réalisation d'un filtre spectral, comportant les étapes suivantes :
- réalisation d'un réseau de fentes dans une couche diélectrique, le réseau étant constitué d'au moins deux sous réseaux de fentes se coupant perpendiculairement les unes aux autres,
- dépôt d'une couche métallique dans le réseau de fentes formé dans la couche diélectrique,
- planarisation de la couche métallique.

L'invention couvre également un autre procédé de réalisation d'un filtre spectral, comportant les étapes de :
- dépôt d'une couche métallique sur une couche diélectrique,
- impression de la couche métallique réalisant, dans la couche métallique, un réseau de fentes, le réseau de fentes étant constitué d'au moins deux sous réseaux de fentes se coupant perpendiculairement les unes aux autres,

- gravure de la couche métallique au niveau des fentes pour les rendre traversantes,
- dépôt d'une couche diélectrique sur la couche métallique,
- planarisation de ladite couche diélectrique.

Après l'étape de planarisation, le procédé peut comporter une étape de report du filtre spectral sur une autre couche de diélectrique par l'intermédiaire de la couche diélectrique du filtre spectral.

Enfin, la présente invention concerne aussi un procédé de réalisation d'un capteur d'images, comportant, avant l'étape de réalisation d'au moins un filtre spectral, objet de la présente invention, une étape de dépôt d'une couche support sur au moins un photodétecteur, le filtre spectral étant réalisé ou reporté sur la couche support.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- les figures 1A et 1B représentent un réseau de filtres colorés disposés sur une matrice de photodétecteurs selon l'art antérieur,
- la figure 2A représente un filtre spectral, objet de la présente invention, selon un premier mode de réalisation,
- la figure 2B représente la couche métallique d'un filtre spectral, objet de la présente invention, selon une variante du premier mode de réalisation,
- la figure 3 représente des courbes de transmission d'un filtre spectral, objet de la présente invention, en fonction de l'angle d'incidence des faisceaux lumineux,
- la figure 4 représente des courbes de transmission d'un filtre spectral, objet de la présente invention, en fonction de l'épaisseur de la couche métallique du filtre,
- la figure 5 représente un exemple de réalisation d'un capteur d'images, également objet de la présente invention,
- les figures 6A à 6F représentent les étapes d'un procédé de réalisation d'un filtre spectral et d'un capteur d'images comportant ce filtre, objets de la présente invention, selon un premier mode de réalisation,
- les figures 7A et 7B représentent les étapes d'un procédé de réalisation d'un filtre spectral et d'un capteur d'images comportant ce filtre, objets de la présente invention, selon un second mode de réalisation,
- les figures 8A à 8D représentent les étapes d'un procédé de réalisation d'un filtre spectral et d'un capteur d'images comportant ce filtre, objets de la présente invention, selon un troisième mode de réalisation,
- les figures 9A à 9B représentent les étapes d'un procédé de réalisation d'un filtre spectral et d'un capteur d'images comportant ce filtre, objets de la présente invention, selon une variante des trois modes de réalisation,

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On se réfère tout d'abord à la figure 2A qui représente un filtre spectral 100, objet de la présente invention, selon un premier mode de réalisation.

Ce filtre spectral 100 comporte une couche métallique 101 structurée. Cette structure est réalisée par des fentes 102a à 102e formant un premier sous réseau, et des fentes 103a à 103h formant un second sous réseau. Ces fentes 102a à 102e et 103a à 103h sont traversantes, c'est-à-dire formées dans toute l'épaisseur de la couche métallique 101. Les fentes 102a à 102e du premier sous réseau coupent perpendiculairement les fentes 103a à 103h du second sous réseau.

Ces deux sous réseaux perpendiculaires l'un par rapport à l'autre permettent de réaliser le filtrage et la transmission, à la fois des modes polarisés transverse électrique TE et des modes polarisés transverse magnétique TM, ces deux modes étant perpendiculaires l'un par rapport à l'autre. Un des deux sous réseaux a donc pour fonction de réaliser le filtrage et la transmission de la lumière polarisée TM, par exemple les fentes 103a à 103h, les fentes 102a à 102e de l'autre sous réseau de réaliser le filtrage et la transmission de la lumière polarisée TE.

Afin d'obtenir des transmissions élevées des faisceaux lumineux filtrés, la couche métallique 101 est réalisée à partir de métaux les moins absorbants possible dans la gamme des longueurs d'ondes transmises. Pour les longueurs d'ondes visibles, il s'agira par exemple de l'aluminium, et/ou de l'argent et/ou de l'or. Il est également possible d'utiliser d'autres métaux, par exemple pour des longueurs d'ondes plus grandes que celles du domaine du visible.

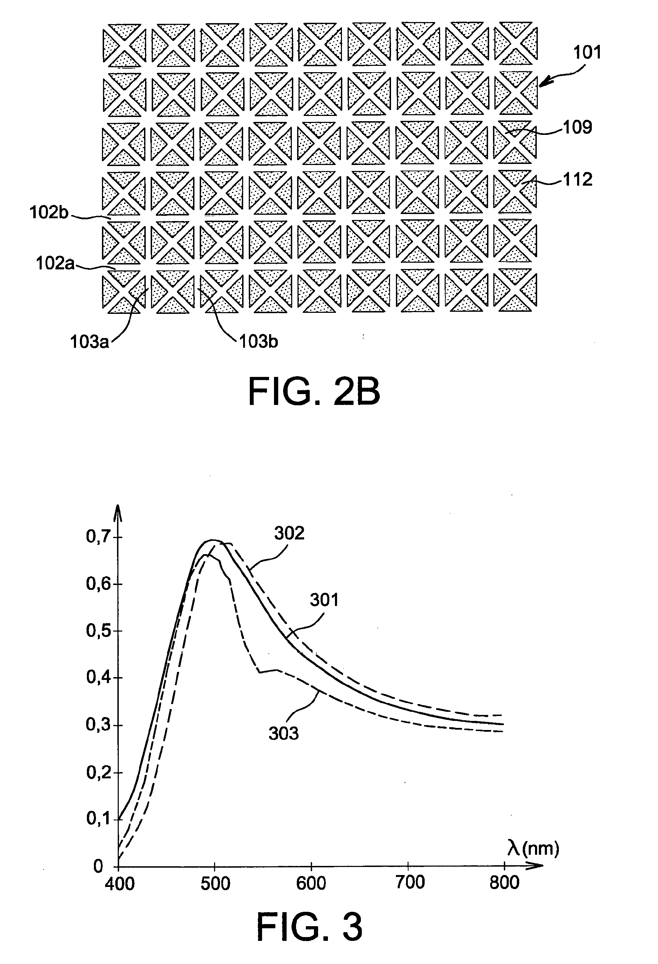

La couche métallique 101 peut également être réalisée selon une variante représentée sur la figure 2B. En plus des deux sous réseaux de fentes 102a, 102b, ... et 103a, 103b, ... formés dans la couche 101, deux autres sous réseaux de fentes traversantes 109 et 112 sont formés dans la couche métallique 101. Dans l'exemple de la figure 2B, les fentes de ces deux sous réseaux 109 et 112 supplémentaires sont perpendiculaires les unes par rapport autres, coupant les fentes 102a, 102b, ... et 103a, 103b, ... des deux premiers sous réseaux selon un angle égal à environ 45°. On obtient alors quatre sous réseaux de fentes 102a à 102e, 103a à 103h, 109 et 112 décalés d'un angle environ égal à 45° les uns des autres. Ainsi, on symétrise encore plus les transmissions de la lumière polarisée TE et de la lumière polarisée TM à incidence oblique.

Chacun des sous réseaux de la figure 2A ou de la figure 2B peut être envisagé comme étant formé par un motif périodique répété plusieurs fois. Ainsi, dans chaque sous réseau, toutes les fentes ont une largeur identique et sont régulièrement espacées les unes des autres. Sur l'exemple de la figure 2A, pour le sous réseau de fentes 102a à 102e, le motif périodique peut par exemple comporter la fente 102a et une partie 107 de la couche métallique 101 séparant les fentes adjacentes 102a et 102b. Le sous réseau est alors formé en répétant six fois ce motif périodique. Pour le sous réseau de fentes 103a à 103h, le motif périodique comporte par exemple la fente 103a et une partie 106 de la couche métallique 101 séparant les deux fentes 103a et 103b adjacentes. La distance entre deux motifs périodiques, c'est à dire la largeur d'un motif périodique, est appelée pas ou période du sous réseau. Pour obtenir une bonne réponse du filtre 100, peu dépendante de l'angle de la lumière incidente, la période d'un ou de chacun des sous réseaux peut par exemple être inférieure à 350 nm. Ainsi, avec une telle période, on évite l'excitation résonante de plasmons de surface sur la couche métallique 101 et on garanti une bonne stabilité angulaire du filtre 100. De manière générale, la largeur de chacune des fentes d'un ou de chacun des sous réseaux est de préférence comprise entre environ 10 % et 50 % de la période de ce ou ces sous réseaux.

Le filtre spectral 100 de la figure 2A comporte également des couches de diélectriques 104 et 105, par exemple des couches minces, disposées respectivement en dessous et au dessus de la couche métallique 101. L'espace créé par les fentes 102a à 102e et 103a à 103h dans la couche métallique 101 est également rempli d'un matériau diélectrique 108, par exemple similaire à celui des couches diélectriques 104 et 105. Ce matériau diélectrique 108 est transparent aux longueurs d'ondes qui sont destinées à être transmises par le filtre spectral 100. L'indice de réfraction du matériau diélectrique 108 peut de préférence être inférieur à 1,6, participant ainsi à garantir la stabilité angulaire du filtre 100, en évitant l'excitation résonante de plasmons de surface sur la couche métallique 101. Le matériau diélectrique peut par exemple être à base d'oxyde de silicium, et/ou de SiOC, et/ou de SiOC nanoporeux, et/ou de silice nanoporeuses, et/ou de polymères. De manière générale, l'épaisseur de la première et/ou la seconde couche diélectrique 104 et 105 est comprise entre environ 50 nm et quelques centaines de nm. Sur la figure 2A, les couches diélectriques 104 et 105 ont une épaisseur d'environ 100 nm. Ces couches diélectriques 104 et 105 peuvent également présenter des structurations, par exemple pour diminuer leur indice moyen. Ces structurations peuvent être similaires ou non à celles de la couche métallique 101, c'est-à-dire aux fentes réalisées dans la couche métallique 101. Ces structurations réalisées dans les couche diélectriques 104 et 105 peuvent être débouchantes, c'est-à-dire réalisées dans toute l'épaisseur de la couche diélectrique, ou non. Ces structurations peuvent également être par exemple des fentes dont la largeur et/ou l'espacement diffèrent par rapport aux fentes réalisées dans la couche métallique 101. Enfin, ces structurations des couche diélectriques 104 et 105 peuvent être différentes d'un photodétecteur à l'autre.

La figure 3 représente des courbes de transmission simulées d'un filtre spectral similaire à celui représenté sur la figure 2A. Le coefficient de transmission est ici exprimé en fonction de la longueur d'onde transmise, exprimée en nanomètres. Ici, la couche métallique du filtre spectral est réalisée à base d'aluminium et a une épaisseur d'environ 150 nm. Comme sur la figure 2A, cette couche métallique comporte deux sous réseaux de fentes se croisant perpendiculairement les unes aux autres. La largeur des fentes est ici d'environ 85 nm, la période des deux sous réseaux étant d'environ 300 nm. La courbe 301 représente les transmissions TE et TM lorsque des faisceaux lumineux arrivent sur le filtre avec un angle d'incidence nul par rapport au plan de la couche métallique. Dans ce cas, les transmissions TE et TM sont identiques. Les valeurs mesurées ici diffèrent peu de celles obtenues lorsque la couche métallique ne comporte qu'un seul sous réseau de fentes orientées toutes dans le même sens, tel que décrit dans l'art antérieur. En effet, les photons sont majoritairement transmis par les fentes favorablement orientées avant d'être réfléchis par les fentes défavorablement orientées. Mais pour un faisceau non polarisé, cette structure permet un gain net en transmission par rapport aux dispositifs de l'art antérieur. La courbe 302 représente la transmission TM, et la courbe 303 la transmission TE, lorsque l'angle d'incidence des faisceaux lumineux est d'environ 15°. On voit que le comportement angulaire du filtre est très stable car les valeurs de transmissions TE et TM s'écartent très peu de la transmission calculée à incidence nulle.

L'épaisseur de la couche métallique d'un filtre a également une influence sur la transmission réalisée par le filtre. De manière générale, cette épaisseur est comprise entre environ 50 nm et quelques centaines de nm. L'épaisseur est choisie en fonction de la longueur d'onde transmise désirée, du diélectrique utilisé dans les fentes de la couche métallique, et de la sélectivité du filtre désirée.

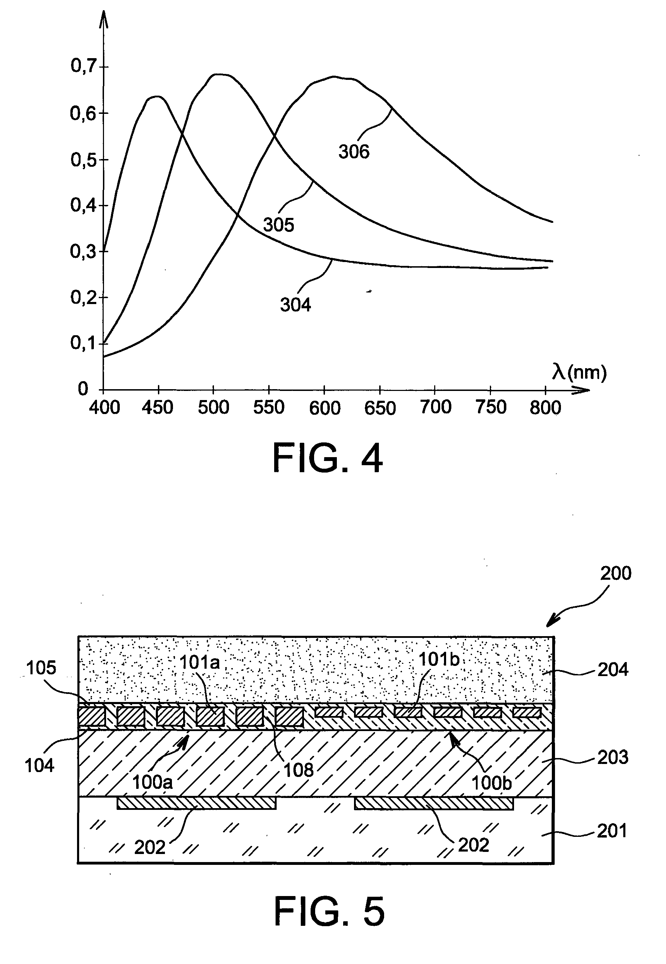

La figure 4 représente la transmission réalisée par un filtre spectral, similaire à celui représenté sur la figure 2A, en fonction de l'épaisseur de la couche métallique du filtre. La largeur des fentes est d'environ 85 nm et la période des sous réseaux est d'environ 300 nm. Le filtre spectral est ici entouré d'air. La valeur du coefficient de transmission est exprimée en fonction de la longueur d'onde transmise, en nanomètres. La courbe 304 correspond à une épaisseur d'environ 130 nm, la courbe 305 à une épaisseur d'environ 160 nm, et la courbe 306 à une épaisseur d'environ 210 nm. On voit sur ces courbes que l'augmentation de l'épaisseur de la couche métallique entraîne une baisse de la sélectivité du filtre, mais également un décalage du maximum de transmission vers des longueurs d'ondes plus grandes. Il est donc possible de réaliser N filtres de N couleurs différentes en juxtaposant N couches de métal de N hauteurs différentes, structurées par le même réseau de fentes.

Le filtrage et la transmission réalisés par le filtre spectral, objet de la présente invention dépend donc principalement de deux facteurs : les dimensions du réseau de fentes (largeur des fentes et période du réseau) et la hauteur de la couche métallique du filtre.

La figure 5 représente un exemple de réalisation d'un capteur d'images 200, objet de la présente invention. Sur cette figure, seulement deux sous pixels, c'est-à-dire deux photodétecteurs 202 et deux filtres spectraux 100a et 100b, sont représentés. Le capteur d'images 200 comporte en réalité plusieurs milliers ou plusieurs millions de pixels. Les photodétecteurs 202 sont réalisés sur un substrat 201, par exemple en silicium, pouvant intégrer des circuits de lecture et de traitements numériques.

Les filtres 100a et 100b comportent chacun une couche métallique, respectivement 101a et 101b. Comme sur l'exemple de la figure 2A, les couches métalliques 101a et 101b comportent un réseau de fentes traversantes constitué de deux sous réseaux de fentes traversantes se coupant perpendiculairement les unes aux autres. Les dimensions de ces fentes peuvent par exemple être similaires à celles du filtre 100 de la figure 2A. Les filtres 100a et 100b sont par exemple disposés au dessus d'un pixel comportant 4 sous pixels configurés selon un schéma de BAYER, le filtre 100a étant par exemple destiné à filtrer et transmettre la couleur verte, et le filtre 100b la couleur bleu. Pour cela, les couches 101a et 101b ont chacune une épaisseur différente, permettant de filtrer uniquement la longueur d'onde désirée. Comme sur l'exemple de la figure 2A, les couches métalliques 101a et 101b sont disposées entre deux couches minces de diélectrique 104 et 105, par exemple similaires aux couches 104 et 105 de la figure 2A, et les fentes formées dans les couches métalliques 101a et 101b sont remplies d'un matériau diélectrique 108. Les couches métallique 101a et 101b sont par exemple réalisées à partir d'une unique couche métallique gravée en fonction de la hauteur de métal souhaitée, c'est à dire de la longueur d'onde à filtrer et transmettre. Les couches métalliques 101a et 101b forment, avec les deux couches diélectriques 104, 105, la couche filtrante du capteur 200.

Les filtres spectraux 100a, 100b sont séparés des photodétecteurs 202 par une couche support 203, par exemple à base de d'un diélectrique tel que du nitrure de silicium ou de l'oxyde de silicium, servant de support mécanique aux filtres spectraux 100a, 100b. Cette couche support 203 peut également comporter des éléments de focalisation, non représentés sur cette figure, servant à concentrer les faisceaux incidents sur les photodétecteurs 202. Cette couche 203 peut également comporter des contacts électriques reliés aux photodétecteurs 202 afin de prélever le signal obtenu, ainsi que réaliser l'isolation et la passivation des photodétecteurs 202. Cette couche support 203 est ici transparente aux longueurs d'ondes que le capteur 200 détecte.

Les filtres 100a et 100b sont recouverts d'une couche de protection 204, par exemple à base de matériaux polymères, qui peut intégrer comme fonction la protection chimique et mécanique des filtres spectraux 100a, 100b, ainsi que la concentration des faisceaux lumineux sur les photodétecteurs 202. Cette couche de protection 204 est ici transparente aux longueurs d'ondes que le capteur 200 détecte.

Dans une variante, les couches métalliques 101a et 101b des filtres 100a et 100b ont une hauteur égale. Dans ce cas, pour que chacun réalise une transmission à une longueur d'onde différente (respectivement par exemple des couleurs verte et bleue), les dimensions des fentes de la couche métallique 101a sont différentes des dimensions des fentes de l'autre couche métallique 101b. Ces dimensions peuvent être la largeur des fentes et/ou la période du réseau.

Le capteur d'images 200 comporte également un troisième 100c et un quatrième 100d filtre spectral, non représentés sur la figure 5, formant avec les deux autres filtres spectraux 100a, 100b, un filtre de Bayer, et au moins deux autres photodétecteurs 202 disposés chacun sous l'un des troisième 100c et quatrième 100d filtres spectraux. Ainsi, les quatre photodétecteurs 202 forment un pixel du capteur d'images 200, le filtrage lumineux étant réalisé par le filtre de Bayer 100a, 100b, 100c, 100d.

La réalisation d'une matrice de filtres de différentes couleurs peut donc être envisagée de deux manières différentes :
- par le matriçage de filtres dont l'épaisseur de la couche métallique est variable d'un sous pixel à l'autre. La période et la largeur des fentes des réseaux est alors la même pour tous les filtres de la matrice,
- par le matriçage de filtres dont les épaisseurs des couches métalliques sont les mêmes, mais dont les tailles de fentes et de périodes différent d'un filtre à l'autre.

Dans les deux cas, les filtres de la matrice peuvent être jointifs les uns avec les autres.

Plusieurs procédés de réalisation d'un filtre spectral, également objets de la présente invention, vont maintenant être décrits. Pour chacun de ces procédés, la réalisation d'un capteur d'images comportant quatre filtres spectraux (un bleu, un rouge et deux vert), disposés selon un schéma de BAYER, d'un pixel va être décrite.

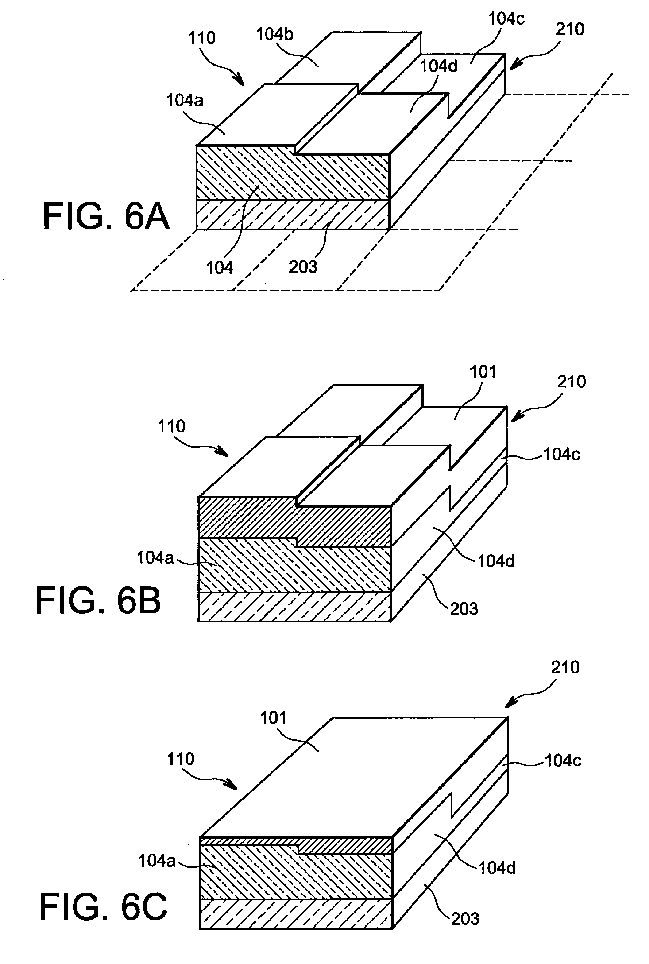

Un premier exemple est décrit en liaison avec les figures 6A à 6F représentant les différentes étapes d'un procédé de réalisation d'un filtre spectral 110 et d'un capteur d'images 210 comportant le filtre spectral 110. Sur ces figures, le capteur d'images 210 comporte quatre filtres spectraux dont seule la réalisation du filtre 110 sera détaillée.

On réalise tout d'abord le dépôt d'une couche diélectrique 104 sur une couche support 203, par exemple similaire à la couche support 203 représentée sur la figure 5, comme cela est représenté sur la figure 6A. L'indice du matériau utilisé pour la réalisation de la couche diélectrique 104 est ici inférieur à 1,6. Cette couche diélectrique 104 comporte des variations de hauteur en fonction du filtre qui va être réalisé. Ainsi, la couche diélectrique 104 forme quatre plots : un premier plot 104a destiné à la réalisation d'un filtre pour un sous pixel bleu, un second et troisième plots 104b, 104d, chacun destiné à un filtre d'un sous pixel vert, et un quatrième plot 104c pour un filtre d'un sous pixel rouge. Chaque plot a par exemple la longueur de ses côtés comprise entre environ 0,5 micromètre et quelques dizaines de micromètres et une hauteur comprise entre environ 50 nm et 200 nm. La variation de hauteur entre deux plots est en général comprise entre 0 nm et 100 nm. Ces plots peuvent être réalisés par exemple par photo lithogravure ou par nano impression. Cette étape sert donc à définir et aligner les zones de filtrage rouge, vert et bleu.

Une couche métallique 101 est ensuite déposée sur les plots diélectriques 104a à 104d, comme cela est représenté sur la figure 6B. Pour la réalisation de filtres de lumière visible, le métal utilisé est par exemple de l'aluminium. Ce dépôt est par exemple réalisé par pulvérisation cathodique.

La figure 6C représente une étape de planarisation de la couche métallique 101. Des techniques de polissage mécano chimique peuvent être utilisées pour cette planarisation. La couche métallique 101 restante a une épaisseur comprise entre environ 50 nm et 200 nm.

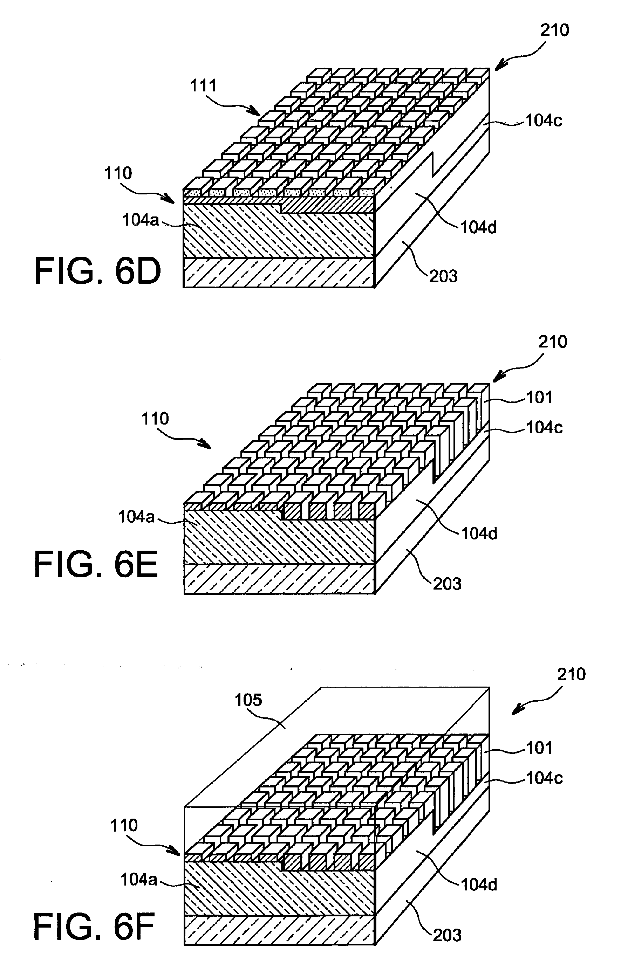

On réalise ensuite le dépôt d'un masque de gravure 111 sur la couche métallique 101, comme cela est représenté sur la figure 6D. Ce masque de gravure 111 est structuré par un réseau de fentes traversantes comprenant deux sous réseau de fentes traversantes se coupant perpendiculairement les unes aux autres. La période du sous réseau de fentes est en général comprise entre environ 100 nm et 400 nm, et la largeur des fentes entre 30 nm et 150 nm. Ce masque 111 peut par exemple être à base de polymère diélectrique. Des techniques d'insolation optique ou électronique dans une pleine couche de polymère photosensible peuvent être utilisées pour la réalisation du masque de gravure 111. Pour une production de masse à bas coût, on utilisera avantageusement des techniques de nano impression voire d'insolation holographique.

Sur la figure 6E, on réalise ensuite une gravure, telle une gravure anisotrope, de la couche métallique 101 utilisant la couche de polymère structurée comme masque de gravure 111. Le motif des fentes perpendiculaires est donc reproduit sur toute l'épaisseur de la couche métallique 101 de manière à former des fentes traversantes.

Enfin, on dépose une couche diélectrique 105 par exemple d'indice inférieur à 1,6 et de quelques centaines de nm d'épaisseur sur la couche métallique 101, comme représenté sur la figure 6F. Cette couche 105 permet de combler l'espace entre les motifs métalliques par du matériau diélectrique et de former la couche diélectrique supérieure du filtre. Une étape de planarisation par polissage mécano chimique est réalisée si d'autres éléments (notamment optique) sont ajoutés sur cette couche diélectrique 105.

Le filtre 110 est réalisé sur un photodétecteur 202 formant un sous pixel du capteur d'images 210. Ainsi, le capteur d'images 210 comporte un filtre de Bayer réalisé à partir de quatre filtres spectraux, dont le filtre 110. Un photodétecteur 202, non représenté, est présent sous chacun des filtres, formant ainsi un pixel du capteur d'images 210.

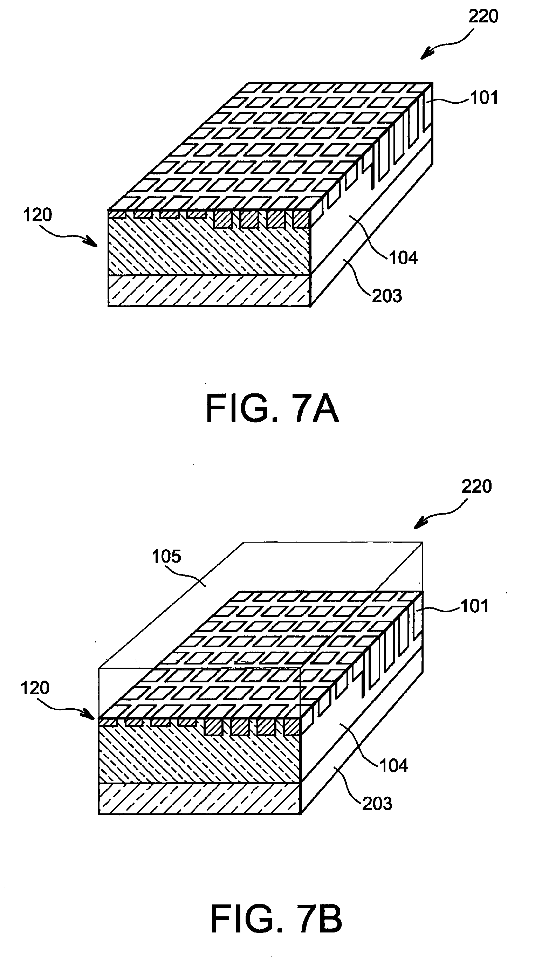

Un procédé de réalisation de filtres spectraux et d'un capteur d'images selon un second mode de réalisation va maintenant être décrit en rapport avec les figures 7A et 7B.

On réalise tout d'abord l'impression d'une couche diélectrique 104 structurée d'indice inférieur à 1,6. Cette couche diélectrique 104 est disposée sur la couche support 203. Cette étape d'impression utilise les techniques de nano impression pour définir simultanément la première couche diélectrique disposée sous la couche métallique du filtre, et le réseau de fentes perpendiculaires. Le motif est ici réalisé en inverse car l'impression réalise des évidements destinés à recevoir le métal pour former la couche métallique structurée.

Une couche métallique 101 est ensuite déposée sur la couche diélectrique 104 structurée afin de remplir les évidements formés dans la structure de la couche diélectrique 104. Une technique de pulvérisation cathodique peut par exemple être utilisée.

On réalise ensuite une planarisation par polissage mécano chimique de la couche métallique 101, jusqu'à l'apparition des plots diélectriques enterrés de la couche diélectrique 104, tel que représenté sur la figure 7A.

Enfin, on dépose une couche diélectrique 105 d'indice inférieur à 1,6, d'une épaisseur comprise entre environ 100 nm et 500 nm, par exemple par PVD (physical vapor deposition en anglais, ou dépôt physique en phase gazeuse) sur les plots de la couche diélectrique 104 et la couche métallique 101.

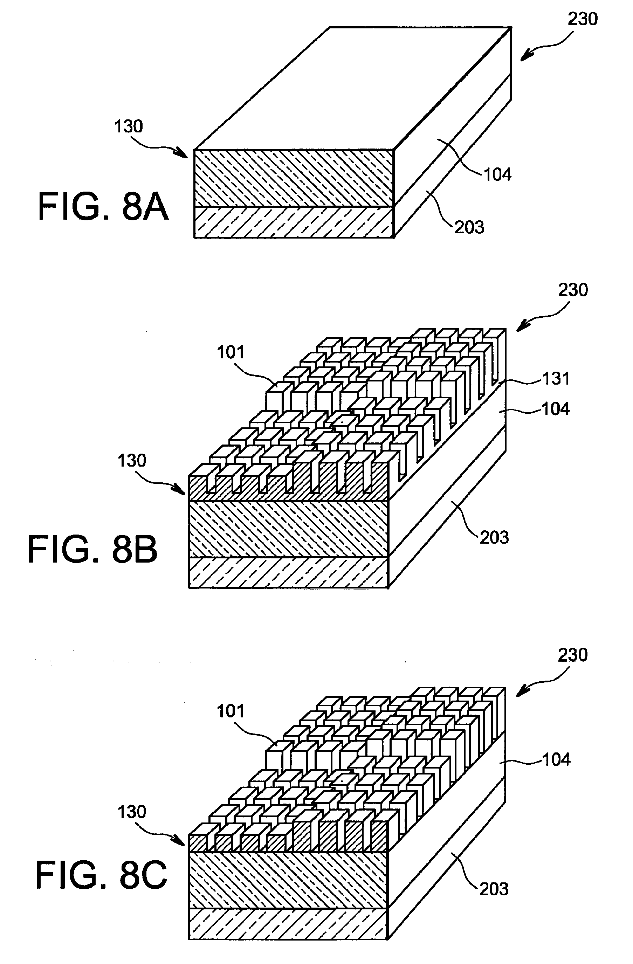

Les figures 8A à 8D représentent un troisième mode de réalisation d'un procédé de réalisation de filtres spectraux selon l'invention et de capteurs d'images, également selon l'invention.

On dépose une couche diélectrique 104 par exemple d'indice inférieur à 1,6, sur une couche support 203, comme représenté sur la figure 8A. Ce dépôt peut par exemple être réalisé par dépôt PVD.

Sur la figure 8B, on réalise une nano impression à chaud de plots métalliques dans une couche métallique 101 déposée sur la couche diélectrique 104. Ces plots comportent un réseau de fentes perpendiculaires entre elles. Chacun des plots réalisés forme la couche métallique d'un filtre spectral. A cette étape, les fentes ne sont pas réalisées traversantes et une sous-couche métallique 131 reste formée sous les fentes. Différentes hauteurs de plots sont réalisées afin d'obtenir des filtres de couleurs différentes. Il est également possible de réaliser des plots de hauteur similaire, mais dont le réseau de fentes comporte des largeurs de fentes et/ou des périodes différentes en fonction du filtrage souhaité.

Une étape de gravure de la couche métallique 101 grave la sous-couche métallique 131, rendant ainsi les fentes traversantes, comme cela est représenté sur la figure 8C.

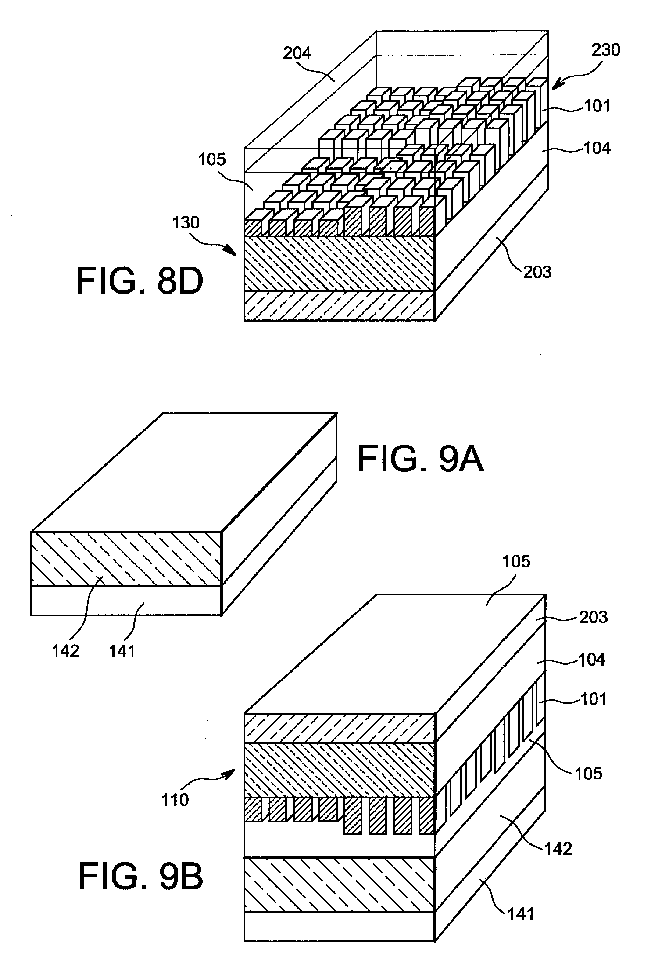

Enfin, sur la figure 8D, une couche diélectrique 105, par exemple inorganique et d'indice inférieur à 1,6, est déposée par technique PVD sur la couche métallique 101, remplissant ainsi les fentes d'un matériau diélectrique et formant la couche diélectrique supérieure. Cette couche supérieure de protection pourrait également être à base d'un polymère planarisant, également d'indice inférieur à 1,6. Dans ce cas, le dépôt pourrait être réalisé par « spin coating » (ou dépôt par centrifugation).

Enfin, une couche de protection 204 est déposée sur la couche diélectrique 105, recouvrant ainsi les filtres spectraux réalisés.

Dans une variante de ces trois modes de réalisation, il est possible de réaliser les filtres spectraux 110, 120, 130 sur une couche support 203 temporaire et/ou transparente, par exemple à base de silicium ou de verre, puis assemblée sur les photodétecteurs par des techniques de collage moléculaire aligné.

Dans ce cas, comme cela est représenté sur la figure 9A, on réalise un dépôt d'une couche diélectrique 142, par exemple d'indice inférieur à 1,6, sur une couche support 141.

On reporte ensuite, sur cette couche diélectrique 142, le filtre spectral 110, 120 ou 130 réalisé précédemment. Chacun des filtres spectraux est aligné avec un photodétecteur se trouvant sous la couche support 141. C'est la couche diélectrique supérieure 105 du filtre spectral qui est en contact avec la nouvelle couche diélectrique 142.

Enfin, si la couche support 203 utilisée durant la réalisation du filtre spectral n'est pas transparente à la longueur d'onde transmise par le filtre, cette couche support 203 qui se retrouve au sommet du filtre spectral est gravée pour être supprimée.

## Revendications

1. Filtre spectral (100) comportant au moins une couche métallique (101) structurée par un réseau de fentes traversantes (102a à 102e, 103a à 103h), le réseau étant constitué d'au moins deux premiers sous réseaux de fentes traversantes (102a à 102e, 103a à 103h) se coupant perpendiculairement les unes aux autres.

2. Filtre spectral (100) selon la revendication 1, comportant en outre au moins un troisième sous réseau de fentes traversantes (109) coupant les fentes (102a à 102e, 103a à 103h) des deux premiers sous réseaux, et/ou un quatrième sous réseau de fentes traversantes (112) coupant les fentes (102a à 102e, 103a à 103h) des deux premiers sous réseaux et les fentes (109) du troisième sous réseau.

3. Filtre spectral (100) selon la revendication 2, dans lequel les fentes (109) du troisième sous réseau coupent les fentes (102a à 102e, 103a à 103h) des deux premiers sous réseaux selon un angle égal à environ 45 degrés et/ou les fentes (112) du quatrième sous réseau coupent perpendiculairement les fentes (109) du troisième sous réseau.

4. Filtre spectral (100) selon l'une des revendications précédentes, dans lequel les fentes (102a à 102e, 103a à 103h, 109, 112) d'un ou de chacun des sous réseaux sont régulièrement espacées les unes des autres et/ou comportent chacune une largeur identique, et/ou chaque sous réseau est formé par la répétition d'un motif périodique, ledit motif périodique comportant une des fentes (102a à 102e, 103a à 103h) du sous réseau et une partie (106, 107) de la couche métallique (101) séparant deux fentes adjacentes du sous réseau.

5. Filtre spectral (100) selon la revendication 4, dans lequel la largeur du motif périodique d'un ou de chacun des sous réseaux est inférieure à environ 350 nm et/ou la largeur de chacune des fentes (102a à 102e, 103a à 103h) d'un ou de chacun des sous réseaux est comprise entre environ 10 % et 50 % de la largeur du motif périodique de ce ou ces sous réseaux.

6. Filtre spectral (100) selon l'une des revendications précédentes, dans lequel l'épaisseur de la couche métallique (101) est comprise entre environ 50 nm et quelques centaines de nm, et/ou la couche métallique (101) est à base d'aluminium, et/ou d'argent, et/ou d'or.

7. Filtre spectral (100) selon l'une des revendications précédentes, dans lequel l'espace créé par les fentes (102a à 102e, 103a à 103h, 109, 112) dans la couche métallique (101) est rempli d'un matériau diélectrique (108), et/ou le filtre (100) comporte en outre au moins une première couche diélectrique (105) disposée au dessus de la couche métallique (101) structurée et/ou au moins une seconde couche diélectrique (104) disposée en dessous de la couche métallique (101) structurée.

8. Filtre spectral (100) selon la revendication 7, dans lequel l'épaisseur de la première (105) et/ou la seconde (104) couche diélectrique est comprise entre environ 50 nm et quelques centaines de nm, et/ou le diélectrique (104, 105, 108) a un indice de réfraction inférieur à environ 1,6.

9. Capteur d'images (200) comportant au moins un premier (100a) et un second (100b) filtre spectral selon l'une quelconque des revendications 1 à 8, disposés dans un même plan horizontal, et au moins deux photodétecteurs (202) disposés sous les filtres spectraux (100a, 100b).

10. Capteur d'images (200) selon la revendication 9, dans lequel les filtres (100a, 100b) sont jointifs les uns avec les autres, et/ou l'épaisseur de la couche métallique (101a) du premier filtre spectral (100a) est différente de l'épaisseur de la couche métallique (101b) du second filtre spectral (100b), ou l'épaisseur de la couche métallique (101a) du premier filtre spectral (100a) est identique à l'épaisseur de la couche métallique (101b) du second filtre spectral (100b), et la largeur du motif périodique et/ou la largeur des fentes des deux filtres spectraux (100a, 100b) sont différentes.

11. Capteur d'images (200) selon l'une quelconque des revendications 9 ou 10, comportant en outre un troisième (100c) et un quatrième (100d) filtre spectral, les quatre filtres spectraux (100a, 100b, 100c, 100d) formant un filtre de Rayer, et au moins deux autres photodétecteurs (202) disposés chacun sous l'un des troisième (100c) et quatrième (100d) filtres spectraux, le filtre de Bayer (100a, 100b, 100c, 100d) et les quatre photodétecteurs (202) formant un pixel du capteur d'images (200).

12. Capteur d'images (200) selon l'une des revendications 9 à 11, dans lequel les photocétecteurs (202) sont réalisés sur un substrat (201), et/ou le capteur d'images (200) comporte en outre une couche de protection (204) recouvrant les filtres spectraux (100a, 100b)et/ou une couche support (203) disposée entre les photodétecteurs (202) et les filtres spectraux (100a, 100b, 100c, 100d).

13. Procédé de réalisation d'un filtre spectral (120), comportant les étapes suivantes :
- réalisation d'un réseau de fentes dans une couche diélectrique (104), le réseau étant constitué d'au moins deux sous réseaux de fentes se coupant perpendiculairement les unes aux autres,
- dépôt d'une couche métallique (101) dans le réseau de fentes formé dans la couche diélectrique (104),
- planarisation de la couche métallique (101) ;
ou comportant les étapes de :
- dépôt d'une couche métallique (101) sur une couche diélectrique (104),
- impression de la couche métallique (101) réalisant, dans la couche métallique (101), un réseau de fentes, le réseau de fentes étant constitué d'au moins deux sous réseaux de fentes se coupant perpendiculairement les unes aux autres,
- gravure de la couche métallique (101) au niveau des fentes pour les rendre traversantes,
- dépôt d'une couche diélectrique (105) sur la couche métallique (101),
- planarisation de ladite couche diélectrique (105).

14. Procédé de réalisation d'un filtre spectral (120, 130) selon la revendication 13, comportant après l'étape de planarisation, une étape de report du filtre spectral (120, 130) sur une autre couche de diélectrique (142) par l'intermédiaire de la couche diélectrique (105) du filtre spectral (120, 130).

15. Procédé de réalisation d'un capteur d'images (220, 230) comportant, avant la réalisation d'au moins un filtre spectral (120, 130) selon l'une des revendications 1 à 8, une étape de dépôt d'une couche support (203) sur au moins un photodétecteur (202), le filtre spectral (120, 130) étant réalisé ou reporté sur la couche support (203).

## Patentansprüche

1. Spektralfilter (100), das mindestens eine Metallschicht (101) aufweist, die durch ein Netz durchgehender Spalten (102a bis 102e, 103a bis 103h) strukturiert ist, wobei das Netz von mindestens zwei ersten Teilnetzen durchgehender Spalten (102a bis 102e, 103a bis 103h), die einander senkrecht schneiden, gebildet wird.

2. Spektralfilter (100) nach Anspruch 1, das ferner mindestens ein drittes Teilnetz durchgehender Spalten (109), die die Spalten (102a bis 102e, 103a bis 103h) der beiden ersten Teilnetze schneiden, und/oder ein viertes Teilnetz durchgehender Spalten (112), die die Spalten (102a bis 102e, 103a bis 103h) der beiden ersten Teilnetze und die Spalten (109) des dritten Teilnetzes schneiden, aufweist.

3. Spektralfilter (100) nach Anspruch 2, wobei die Spalten (109) des dritten Teilnetzes die Spalten (102a bis 102e, 103a bis 103h) der beiden ersten Teilnetze in einem Winkel von gleich etwa 45 Grad schneiden und/oder die Spalten (112) des vierten Teilnetzes die Spalten (109) des dritten Teilnetzes senkrecht schneiden.

4. Spektralfilter (100) nach einem der vorhergehenden Ansprüche, wobei die Spalten (102a bis 102e, 103a bis 103h, 109, 112) von einem oder jedem der Teilnetze voneinander regelmäßig beabstandet sind und/oder jeweils eine identische Breite aufweisen und/oder jedes Teilnetz durch Wiederholung eines periodischen Motivs gebildet ist, wobei das periodische Motiv eine der Spalten (102a bis 102e, 103a bis 103h) des Teilnetzes und einen Teil (106, 107) der Metallschicht (101), der zwei benachbarte Spalten des Teilnetzes trennt, umfasst.

5. Spektralfilter (100) nach Anspruch 4, wobei die Breite des periodischen Motivs von einem oder jedem der Teilnetze geringer als etwa 350 nm ist und/oder die Breite von jeder der Spalten (102a bis 102e, 103a bis 103h) von einem oder jedem der Teilnetze zwischen etwa 10 % und 50 % der Breite des periodischen Motivs von diesem Teilnetz oder diesen Teilnetzen beträgt.

6. Spektralfilter (100) nach einem der vorhergehenden Ansprüche, wobei die Dicke der Metallschicht (101) zwischen etwa 50 nm und einigen Hundert nm beträgt und/oder die Metallschicht (101) auf Aluminium und/oder Silber und/oder Gold basiert.

7. Spektralfilter (100) nach einem der vorhergehenden Ansprüche, wobei der durch die Spalten (102a bis 102e, 103a bis 103h, 109, 112) in der Metallschicht (101) erzeugte Zwischenraum mit einem dielektrischen Material (108) gefüllt ist und/oder das Filter (100) ferner mindestens eine erste dielektrische Schicht (105), die oberhalb der strukturierten Metallschicht (101) angeordnet ist, und/oder mindestens eine zweite dielektrische Schicht (104), die unterhalb der strukturierten Metallschicht (101) angeordnet ist, aufweist.

8. Spektralfilter (100) nach Anspruch 7, wobei die Dicke der ersten (105) und/oder der zweiten (104) dielektrischen Schicht zwischen etwa 50 nm und einigen Hundert nm beträgt und/oder das Dielektrikum (104, 105, 108) einen geringeren Brechungsindex als etwa 1,6 aufweist.

9. Bildsensor (200), der mindestens ein erstes (100a) und ein zweites (100b) Spektralfilter nach einem der Ansprüche 1 bis 8, die in einer gleichen horizontalen Ebene angeordnet sind, und mindestens zwei Photodetektoren (202), die unter den Spektralfiltern (100a, 100b) angeordnet sind, aufweist.

10. Bildsensor (200) nach Anspruch 9, wobei die Filter (100a, 100b) aneinanderstoßend sind und/oder die Dicke der Metallschicht (101a) des ersten Spektralfilters (100a) von der Dicke der Metallschicht (101b) des zweiten Spektralfilters (100b) verschieden ist oder die Dicke der Metallschicht (101a) des ersten Spektralfilters (100a) identisch mit der Dicke der Metallschicht (101b) des zweiten Spektralfilters (100b) ist und die Breite des periodischen Motivs und/oder die Breite der Spalten der beiden Spektralfilter (100a, 100b) verschieden sind.

11. Bildsensor (200) nach einem der Ansprüche 9 oder 10, der ferner ein drittes (100c) und ein viertes (100d) Spektralfilter aufweist, wobei die vier Spektralfilter (100a, 100b, 100c, 100d) ein Bayer-Filter bilden, und mindestens zwei weitere Photodetektoren (202), die jeweils unter dem dritten (100c) bzw. dem vierten (100d) Spektralfilter angeordnet sind, aufweist, wobei das Bayer-Filter (100a, 100b, 100c, 100d) und die vier Photodetektoren (202) ein Pixel des Bildsensors (200) bilden.

12. Bildsensor (200) nach einem der Ansprüche 9 bis 11, wobei die Photodetektoren (202) auf einem Substrat (201) ausgeführt sind und/oder der Bildsensor (200) ferner eine Schutzschicht (204), die die Spektralfilter (100a, 100b) bedeckt, und/oder eine Trägerschicht (203), die zwischen den Photodetektoren (202) und den Spektralfiltern (100a, 100b, 100c, 100d) angeordnet ist, aufweist.

13. Verfahren zur Realisierung eines Spektralfilters (120), das die folgenden Schritte aufweist:
- Realisierung eines Spaltennetzes in einer dielektrischen Schicht (104), wobei das Netz von mindestens zwei Teilnetzen von Spalten, die einander senkrecht schneiden, gebildet wird,
- Ablagerung einer Metallschicht (101) in dem in der dielektrischen Schicht (104) ausgebildeten Spaltennetz,
- Einebnen der Metallschicht (101);
oder die folgenden Schritte aufweist:
- Ablagerung einer Metallschicht (101) auf einer dielektrischen Schicht (104),
- Prägen bzw. Imprint der Metallschicht (101), wobei in der Metallschicht (101) ein Spaltennetz realisiert wird, wobei das Spaltennetz von mindestens zwei Teilnetzen von Spalten, die einander senkrecht schneiden, gebildet wird,
- Gravieren der Metallschicht (101) auf dem Niveau der Spalten, um diese durchgehend zu machen,
- Ablagerung einer dielektrischen Schicht (105) auf der Metallschicht (101),
- Einebnen der dielektrischen Schicht (105).

14. Verfahren zur Realisierung eines Spektralfilters (120, 130) nach Anspruch 13, das nach dem Schritt des Einebnens einen Schritt der Übertragung des Spektralfilters (120, 130) auf eine andere dielektrische Schicht (142) über die dielektrische Schicht (105) des Spektralfilters (120, 130) umfasst.

15. Verfahren zur Realisierung eines Bildsensors (220, 230), das vor der Realisierung von mindestens einem Spektralfilter (120, 130) nach einem der Ansprüche 1 bis 8 einen Schritt der Ablagerung einer Trägerschicht (203) auf mindestens einem Photodetektor (202) umfasst, wobei das Spektralfilter (120, 130) auf der Trägerschicht (203) realisiert oder übertragen wird.

## Claims

1. Spectral filter (100) comprising at least one metal layer (101) structured by a grating of traversing slots (102a to 102e, 103a to 103h), wherein the grating consists of at least two first subgratings of traversing slots (102a to 102e, 103a to 103h) intercepting one another perpendicularly.

2. Spectral filter (100) according to claim 1, further comprising at least one third subgrating of traversing slots (109) intercepting the slots (102a to 102e, 103a to 103h) of the two first subgratings, and/or one fourth subgrating of traversing slots (112) intercepting the slots (102a to 102e, 103a to 103h) of the two first subgratings and the slots (109) of the third subgrating.

3. Spectral filter (100) according to claim 2, the slots (109) of the third subgrating intercepting the slots (102a to 102e, 103a to 103h) of the two first subgratings at an angle equal to around 45 degrees and/or the slots (112) of the fourth subgrating perpendicularly intercepting the slots (109) of the third subgrating.

4. Spectral filter (100) according to one of the previous claims, wherein the slots (102a to 102e, 103a to 103h, 109, 112) of one or each of the subgratings are regularly spaced apart and/or each comprise an identical width, and/or each subgrating is formed by the repetition of a periodic pattern, said periodic pattern comprising one of the slots (102a to 102e, 103a to 103h) of the subgrating and a part (106, 107) of the metal layer (101) separating two adjacent slots of the subgrating.

5. Spectral filter (100) according to claim 4, wherein the width of the periodic pattern of one or each of the subgratings is less than around 350 nm and/or the width of each of the slots (102a to 102e, 103a to 103h) of one or each of the subgratings is between around 10 % and 50 % of the width of the periodic pattern of this or these subgratings.

6. Spectral filter (100) according to one of the previous claims, wherein the thickness of the metal layer (101) is between around 50 nm and several hundreds of nm and/or the metal layer (101) is based on aluminium, and/or silver, and/or gold.

7. Spectral filter (100) according to one of the previous claims, wherein the space created by the slots (102a to 102e, 103a to 103h, 109, 112) in the metal layer (101) is filled with a dielectric material (108), and/or the filter (100) further comprises at least one first dielectric layer (105) arranged above the structured metal layer (101) and/or at least one second dielectric layer (104) arranged below the structured metal layer (101).

8. Spectral filter (100) according to claim 7, wherein the thickness of the first (105) and/or the second (104) dielectric layer is between around 50 nm and several hundreds of nm, and/or the dielectric (104, 105, 108) has a refractive index less than around 1.6.

9. Image sensor (200) comprising at least one first (100a) and one second (100b) spectral filter according to any of claims 1 to 8, arranged in a same horizontal plane, and at least two photodetectors (202) arranged underneath the spectral filters (100a, 100b).

10. Image sensor (200) according to claim 9, wherein the filters (100a, 100b) are contiguous to each other, and/or the thickness of the metal layer (101a) of the first spectral filter (100a) is different to the thickness of the metal layer (101b) of the second spectral filter (100b), or the thickness of the metal layer (101a) of the first spectral filter (100a) is identical to the thickness of the metal layer (101b) of the second spectral filter (100b), and the width of the periodic pattern and/or the width of the slots of the two spectral filters (100a, 100b) is different.

11. Image sensor (200) according to one of claims 9 or 10, further comprising a third (100c) and a fourth (100d) spectral filter, the four spectral filters (100a, 100b, 100c, 100d) forming a Bayer filter, and at least two other photodetectors (202) each arranged under one of the third (100c) and fourth (100d) spectral filters, the Bayer filter (100a, 100b, 100c, 100d) and the four photodetectors (202) forming a pixel of the image sensor (200).

12. Image sensor (200) according to one of claims 9 to 11, wherein the photodetectors (202) are formed on a substrate (201), and/or the image sensor (200) further comprises a protective layer (204) covering the spectral filters (100a, 100b) and/or a support layer (203) arranged between the photodetectors (202) and the spectral filters (100a, 100b, 100c, 100d).

13. Method of producing a spectral filter (120), comprising the following steps:
- making a grating of slots in a dielectric layer (104), wherein the grating consists of at least two subgratings of slots intercepting one another perpendicularly,
- depositing a metal layer (101) in the grating of slots formed in the dielectric layer (104),
- planarising the metal layer (101);
or comprising the steps of:
- depositing a metal layer (101) on a dielectric layer (104),
- impressing the metal layer (101) forming, in the metal layer (101), a grating of slots, wherein the grating of slots consists of at least two subgratings of slots intercepting one another perpendicularly,
- etching the metal layer (101) at the level of the slots to make them traversing,
- depositing a dielectric layer (105) on the metal layer (101),
- planarising said dielectric layer (105).

14. Method of producing a spectral filter (120, 130) according to claim 13, comprising after the planarisation step, a step of transferring the spectral filter (120, 130) onto another layer of dielectric (142) through the intermediary of the dielectric layer (105) of the spectral filter (120, 130).

15. Method of producing an image sensor (220, 230) comprising, before the making of at least one spectral filter (120, 130) according to one of claims 1 to 8, a step of depositing a support layer (203) on at least one photodetector (202), wherein the spectral filter (120, 130) is formed on or transferred onto the support layer (203).
